# EUROPEAN PATENT SPECIFICATION

(11) **EP 2 339 428 B1**
(45) Date of publication and mention of the grant of the patent: **26.02.2014**
(21) Application number: 10194293.6
(22) Date of filing: 09.12.2010
(51) Int. Cl.: G06F 1/32, G06F 1/26

(54) **Apparatus and method for using multiple memories in a portable terminal**
Vorrichtung und Verfahren zur Verwendung mehrerer Speicher in einem tragbaren Endgerät
Appareil et procédé d'utilisation de plusieurs mémoires dans un terminal portable

(30) Priority: 09.12.2009 KR 20090122042
(43) Date of publication of application: 29.06.2011
(73) Proprietor: Samsung Electronics Co., Ltd., Suwon-si, Gyeonggi-do, 443-742 (KR)
(72) Inventor: Kim, Young-Seok, Seoul (KR)
(74) Representative: Birchenough, Lewis

(56) References cited:
- WO-A1-2009/064017
- US-A1- 2004 212 831
- US-A1- 2005 156 041

## Description

### 1. Field of the Invention:

The present invention relates to a portable terminal. More particularly, the present invention relates to an apparatus and a method for using a plurality of memories in the portable terminal.

### 2. Description of the Related Art:

Recently, a portable terminal for processing digital data has been developed that supports additional attachable/detachable memory cards to satisfy users' demands of storing more data. That is, the portable terminal employs a socket capable of detecting an additional memory card, so that when the memory card is inserted into the socket, the portable terminal accesses the inserted memory card to perform a certain operation, e.g., an operation of outputting the stored data or an operation of storing specific data, and the like. The portable terminal supporting the additional memory card may be a personal portable terminal, a digital camera, a mobile communication terminal, and the like. The memory card may be a T-flash memory card, a Secure Digital (SD) card, a micro SD card, and the like.

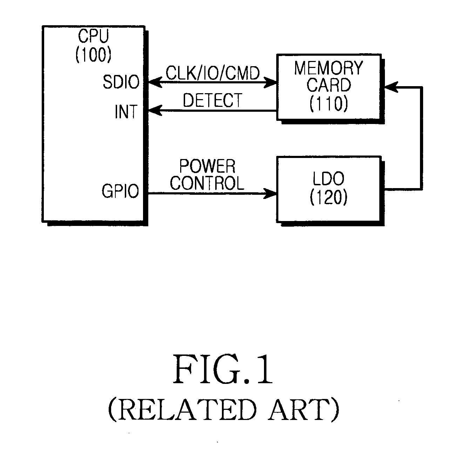

FIG. 1 is a block diagram illustrating a structure of a portable terminal according to the related art.

Referring to FIG. 1, the portable terminal allows a Central Processing Unit (CPU) 100 to detect and control only one memory card 110. That is, when the memory card 110 is inserted into the portable terminal, the CPU 100 detects insertion of the memory card 110 through a port INT, and controls a Low Drop Out (LDO) regulator 120 through a port General Purpose Input/Output (GPIO) to supply power to the memory card 110. Thereafter, the CPU 100 processes data by accessing the memory card 110 through a port Secure Digital Input/Output (SDIO).

As described above, the portable terminal of the related art has a socket capable of detecting one memory card, and thus supports only one memory card at once. Therefore, if a user has two or more memory cards, the user has to detach a memory card inserted into the portable terminal and then insert a second card whenever the user desires to use the second memory card, which leads to inconvenience of the user. In addition, there is a great possibility of losing a memory card not inserted into the portable terminal.

US 2005/0156041 describes a technique for controlling power consumption in a memory card and memory card reader. US 2004/0212831 describes a technique for selecting which slot of a multi-card-slot card reader is the effectual card slot.

### SUMMARY OF THE INVENTION

An aspect of the present invention is to address at least the above-mentioned problems and/or disadvantages and to provide at least the advantages described below. Accordingly, an aspect of the present invention is to provide an apparatus and a method for using a plurality of memories in a portable terminal.

Another aspect of the present invention is to provide an apparatus and a method for supporting a plurality of memories by employing a plurality of sockets for memory detection in a portable terminal.

Another aspect of the present invention is to provide an apparatus and a method for controlling power for each memory based on whether the memory is in use when a plurality of memories are inserted in a portable terminal.

In accordance with an aspect of the present invention, a method for using a plurality of memories in a portable terminal is provided. The method includes: detecting insertion of a first memory card, when the first memory card is inserted; determining whether a second memory card is inserted; and controlling power for the first memory card according to whether the second memory card is inserted.

In accordance with another aspect of the present invention, an apparatus for using a plurality of memories in a portable terminal is provided. The apparatus includes: a Central Processing Unit (CPU) for detecting whether a plurality of memory cards are inserted, and upon detecting insertion of a first memory card among the plurality of memory cards when the first memory card is inserted, for controlling power for the first memory card according to whether a second memory card is inserted; and a plurality - of power supply units for turning on/off power for corresponding memory cards under the control of the CPU.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 is a block diagram illustrating a structure of a portable terminal according to the related art;
FIG. 2 is a block diagram illustrating a structure of a portable terminal according to an exemplary embodiment of the present invention; and
FIG. 3 is a flowchart illustrating a process of supporting a plurality of memory cards in a portable terminal according to an exemplary embodiment of the present invention.

Throughout the drawings, it should be noted that like reference numbers are used to depict the same or similar elements, features, and structures

### DETAILED DESCRIPTION OF EXEMPLARY EMBODIMENTS

The following description with reference to the accompanying drawings is provided to assist in a comprehensive understanding of exemplary embodiments of the invention as defined by the claims. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Exemplary embodiments of the present invention provide a method for supporting a plurality of memories in a portable terminal. Although a case where the portable terminal supports two memory cards will be described, for example, in the following description, the present invention may also equally apply to a case where two or more memory cards are supported. In addition, the memory card includes all types of memory cards that may be inserted into the portable terminal, such as, a T-flash memory card, a Secure Digital (SD) card, a micro SD card, and the like.

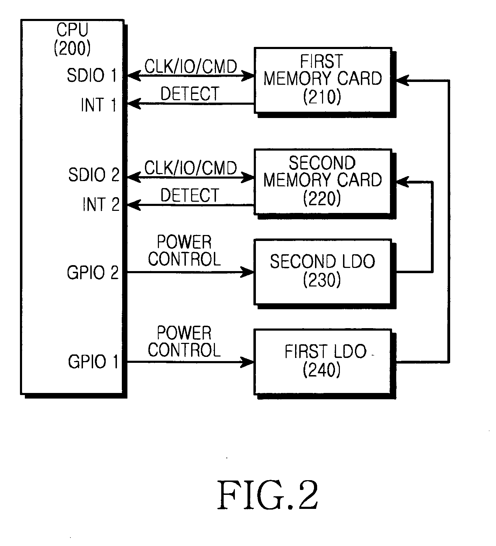

FIG. 2 is a block diagram illustrating a structure of a portable terminal according to an exemplary embodiment of the present invention.

Referring to FIG. 2, the portable terminal includes a Central Processing Unit (CPU) 200, a second Low Drop Out (LDO) regulator (hereinafter, referred to as LDO) 230, and a first LDO 240. A first memory card 210 and a second memory card 220 may be inserted into the portable terminal.

The CPU 200 controls and processes overall operations of the portable terminal. In an exemplary embodiment of the present invention, the CPU 200 detects insertion of each of the first memory card 210 and the second memory card 220. When the first memory card 210 and the second memory card 220 are both inserted, the CPU 200 controls power on/off for a last inserted memory card according to whether a first inserted memory card is in use between the first memory card 210 and the second memory card 220.

More specifically, the CPU 200 detects insertion of the first memory card 210 according to a phase change of a port INT1, and detects insertion of the second memory card 220 according to a phase change of a port INT2. Upon detecting insertion of the first memory card 210 through the port INT1, the CPU 200 determines whether to supply power to the first memory card 210 according to whether the second memory card 220 is inserted and in use. Further, by outputting a control signal for indicating whether to supply the power through a port GPIO1, the CPU 200 controls on/off for the first memory card 210. In addition, upon detecting insertion of the second memory card 220 through the port INT2, the CPU 200 determines whether to supply power to the second memory card 220 according to whether the first memory card 210 is inserted and in use. Further, by outputting a control signal for indicating whether to supply the power through a port GPIO2, the CPU 200 controls on/off for the second memory card 220. Herein, an interface between the CPU 200 and the first memory card 210 and the second memory card 220 is configured with an additional SD block.

Upon detecting insertion of the first memory card 210, the CPU 200 evaluates whether the second memory card 220 is in a state of being inserted into the portable terminal. In this case, if the second memory card 220 is not in the state of being inserted into the portable terminal, the CPU 200 determines to supply power to the second memory card 220 and thereafter outputs a control signal for indicating the determination result to the first LDO 240 through the port GPIO1. Accordingly, the CPU 200 supplies power to the first memory card 210 and accesses the first memory card 210 through a port SDIO1. Otherwise, if the second memory card 220 is in the state of being inserted into the portable terminal, the CPU 200 determines whether to supply power to the first memory card 210 according to whether the first inserted second memory card 220 is in use. Herein, whether the second memory card 220 is in use may be determined according to whether an operation is performed using data stored in the second memory card 220 or whether data is being stored in the second memory card 220. If the second memory card 220 is currently in use, the CPU 200 determines not to supply power to the first memory card 210, and outputs a control signal for indicating the determination result to the first LDO 240 through the port GPIO1. Otherwise, if the second memory card 220 is not currently in use, the CPU 200 determines to supply power to the first memory card 210, outputs a control signal for indicating the determination result to the first LDO 240 through the port GPIO1, and then accesses the first memory card 210. Such an operation is equally applied even if the second memory card 220 is inserted.

In addition, in a state where the two memory cards 210 and 220 are inserted in such a manner that power is supplied to the first memory card 210 and power is not supplied to the second memory card 220, if an event for requiring access to the second memory card 220 occurs, the CPU 200 stops the supply of power to the first memory card 210 and outputs control signals for enabling the supply of power to the second memory card 220 through the ports GPIO1 and GPIO2. Thus, the CPU 200 may access the second memory card 220.

The first memory card 210 and the second memory card 220 are memory cards that may be attached to and detached from the portable terminal. The first memory card 210 and the second memory card 220 receive power by means of the second LDO 230 and the first LDO 240, receive a clock through the ports SDIO1 and SDIO2 of the CPU 200, perform data input/output, and transmit and receive a command signal for data processing. The first memory card 210 and the second memory card 220 may be T-flash memory cards, SD cards, micro SD cards and the like.

The second LDO 230 and the first LDO 240 supply power to a corresponding memory card or stop the supply of power according to a control signal output from the CPU 200.

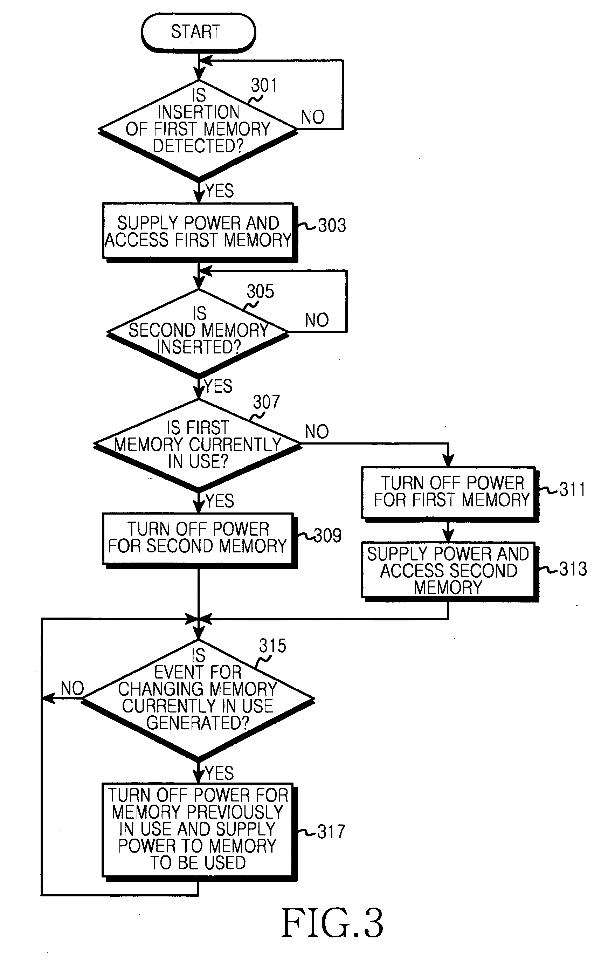

FIG. 3 is a flowchart illustrating a process of supporting a plurality of memory cards in a portable terminal according to an exemplary embodiment of the present invention.

Although it is assumed herein that the first memory card 210 is first inserted and then the second memory card 220 is inserted, it should be understood that the memory cards 210 and 220 order of insertion is for exemplary purposes only. Thus, the memory cards 210 and 220 may be inserted in any order.

Referring to FIG. 3, the portable terminal detects insertion of a first memory card 210 in step 301. The insertion of the first memory card 210 may be detected according to a phase change of port INT 1 of the CPU 200.

Upon detecting insertion of the first memory card 210, the portable terminal supplies power and accesses the first memory card 210 in step 303. In this case, the portable terminal may output a power on/off signal to the port GPIO1 of the CPU 200 to supply power to the first memory card 210 by controlling the first LDO 240.

In step 305, the portable terminal detects insertion of the second memory card 220. If the second memory card 220 is inserted in step 305, the portable terminal determines whether the first memory card 210 inserted is currently in use in step 307. For example, the portable terminal determines whether data stored in the first memory card 210 is in use or data is being stored in the first memory card 210.

If it is determined that the first memory card 210 is in use in step 307, the portable terminal turns off power for the second memory card 220 in step 309. The procedure then proceeds to step 315. In this case, the portable terminal maintains a power-on state for the first memory card 210.

Otherwise, if it is determined that the first memory card 210 is not in use, the portable terminal turns off power for the first memory card 210 in step 311. In step 313, the portable terminal supplies power and accesses the second memory card 220. Then, the procedure proceeds to step 315.

In step 315, the portable terminal determines whether an event for changing a memory currently in use is generated under the control of a user. If it is determined that the event for changing the memory currently in use is generated in step 315, the portable terminal turns off power for the memory card previously in use, applies power to a memory card to be used in step 317. The procedure then returns to step 315 and the subsequent steps are repeated. For example, in a state where power of the first memory card 210 is on and power of the second memory card 220 is off, when an event for storing data in the second memory card 220 is generated, the portable terminal turns off power of the first memory card 210, supplies power to the second memory card 220, and accesses the second memory card 220.

As described above, when the event for changing the memory currently in use is generated under the control of the user, the power of the memory card previously in use is off and the power of the memory card to be used is on. However, even if the event for changing the memory currently in use is not generated, the power of the memory card previously in use may be off if the memory card previously in use is not used for a specific time period or if the use of the memory card ends. For example, when two memory cards are not used in a state where the two memory cards are inserted into the portable terminal, power for the two memory cards may be off.

According to exemplary embodiments of the present invention, a portable terminal employs a plurality of sockets for memory detection to enable insertion of a plurality of memories, and controls power for each memory based on whether the plurality of memories are used. Therefore, memory cards are effectively used while avoiding collision of the memory cards, and data is transferred between the memory cards without an external setting. Further, data transfer time is decreased and power consumption is reduced between the portable terminal has the same effect as a case of supporting one memory card.

While the invention has been shown and described with reference to certain exemplary embodiments thereof, it will be understood by those skilled in the art that various changes in form and details may be made therein without departing from the scope of the present invention as defined by the appended claims.

## Claims

1. A method for using a plurality of memories in a portable terminal, the method comprising:
detecting (301) insertion of a first memory card (210), when the first memory card (210) is inserted;
determining (305) whether a second memory card (220) is inserted; and
controlling power for the first memory card (210) according to whether the second memory card (220) is inserted.

2. The method of claim 1, wherein the controlling of the power for the first memory card (210) comprises:
if the second memory card (220) is inserted, determining whether the second memory card (220) is in use; and
if the second memory card (220) is in use, turning off the power for the first memory card (210), and if the second memory card (220) is not in use, turning on the power for the first memory card (210).

3. The method of claim 2, further comprising:
if the second memory card (220) is not in use, turning off the power for the second memory card (220).

4. The method of claim 2, further comprising:
if the second memory card (220) is not inserted, turning on the power for the first memory card (210).

5. The method of claim 2, further comprising:
if an event for changing the memory in use is generated (315) in a state where the power for the first memory card (210) is off, turning on (317) the power for the first memory card (210) and turning off (317) the power for the second memory card (220).

6. The method of claim 2, further comprising:
if an event for storing data in a second memory card (220) is generated in a state where power for the first memory card (210) is on, turning off the power for the first memory card (210) and turning on the power to the second memory card (220).

7. The method of claim 2, wherein the first memory card (210) and the second memory card (220) each comprise an interface that is configured with a separate Secure Digital, SD, block in the portable terminal.

8. An apparatus for using a plurality of memories in a portable terminal, the apparatus comprising:
a Central Processing Unit, CPU, (200) for detecting whether a plurality of memory cards are inserted, and upon detecting insertion of a first memory card (210) among the plurality of memory cards when the first memory card (210) is inserted, for controlling power for the first memory card (210) according to whether a second memory card (210) is inserted; and
a plurality of power supply units (230, 240) for turning on/off power for corresponding memory cards (210, 220) under the control of the CPU (200).

9. The apparatus of claim 8, wherein the CPU (200) determines whether the second memory card (220) is in use if the second memory card (220) is inserted, turns off the power for the first memory card (210) if the second memory card (220) is in use, and turns on the power for the first memory card (210) if the second memory card (220) is not in use.

10. The apparatus of claim 9, wherein, if the second memory card (220) is not in use, the CPU (200) turns off the power for the second memory card (220).

11. The apparatus of claim 9, wherein, if the second memory card (220) is not inserted, the CPU (200) turns on the power for the first memory card (210).

12. The apparatus of claim 9, wherein, if an event for changing the memory in use is generated in a state where the power for the first memory card (210) is off, the CPU (200) turns on the power for the first memory card (210) and turns off the power for the second memory card (220).

13. The apparatus of claim 9, wherein, if an event for storing data in a second memory card (220) is generated in a state where power for the first memory card (210) is on, the CPU (200) turns off the power for the first memory card (210) and turning on the power for the second memory card (220).

14. The apparatus of claim 9, wherein the CPU (200) and each of the plurality of memory cards (210, 220) comprise an interface that is configured with a separate Secure Digital, SD, block.

## Patentansprüche

1. Verfahren zum Verwenden mehrerer Speicher in einem tragbaren Endgerät, wobei das Verfahren Folgendes beinhaltet:
Erkennen (301) des Einführens einer ersten Speicherkarte (210), wenn die erste Speicherkarte (210) eingeführt wird;
Ermitteln (305), ob eine zweite Speicherkarte (220) eingeführt ist; und
Regeln der Leistung für die erste Speicherkarte (210) je nachdem, ob die zweite Speicherkarte (220) eingeführt ist.

2. Verfahren nach Anspruch 1, wobei das Regeln der Leistung für die erste Speicherkarte (210) Folgendes beinhaltet:
Ermitteln, wenn die zweite Speicherkarte (220) eingeführt ist, ob die zweite Speicherkarte (220) in Gebrauch ist; und
Ausschalten, wenn die zweite Speicherkarte (220) in Gebrauch ist, der Leistung für die erste Speicherkarte (210), und Einschalten, wenn die zweite Speicherkarte (220) nicht in Gebrauch ist, der Leistung für die erste Speicherkarte (210).

3. Verfahren nach Anspruch 2, das ferner Folgendes beinhaltet:
Ausschalten, wenn die zweite Speicherkarte (220) nicht in Gebrauch ist, der Leistung für die zweite Speicherkarte (220).

4. Verfahren nach Anspruch 2, das ferner Folgendes beinhaltet:
Einschalten, wenn die zweite Speicherkarte (220) nicht eingeführt ist, der Leistung für die erste Speicherkarte (210).

5. Verfahren nach Anspruch 2, das ferner Folgendes beinhaltet:
Einschalten (317), wenn ein Ereignis zum Ändern des Speichers im Gebrauch in einem Zustand erzeugt (315) wird, in dem die Leistung für die erste Speicherkarte (210) abgeschaltet ist, der Leistung für die erste Speicherkarte (210) und Ausschalten (317) der Leistung für die zweite Speicherkarte (220).

6. Verfahren nach Anspruch 2, das ferner Folgendes beinhaltet:
Ausschalten, falls ein Ereignis zum Speichern von Daten in einer zweiten Speicherkarte (220) in einem Zustand erzeugt wird, in dem die Leistung für die erste Speicherkarte (210) eingeschaltet ist, der Leistung für die erste Speicherkarte (210) und Einschalten der Leistung zur zweiten Speicherkarte (220).

7. Verfahren nach Anspruch 2, wobei die erste Speicherkarte (210) und die zweite Speicherkarte (220) jeweils eine Schnittstelle umfassen, die mit einem separaten SD-(Secure Digital)-Block in dem tragbaren Endgerät konfiguriert ist.

8. Vorrichtung zum Benutzen mehrerer Speicher in einem tragbaren Endgerät, wobei die Vorrichtung Folgendes umfasst:
eine CPU (Central Processing Unit) (200) zum Erkennen, ob mehrere Speicherkarten eingeführt sind, und nach dem Erkennen des Einführens einer ersten Speicherkarte (210) aus den mehreren Speicherkarten, wenn die erste Speicherkarte (210) eingeführt ist, zum Regeln von Leistung für die erste Speicherkarte (210) je nachdem, ob eine zweite Speicherkarte (220) eingeführt ist; und
mehrere Leistungsversorgungseinheiten (230, 240) zum Ein-/Ausschalten von Leistung für entsprechende Speicherkarten (210, 220) unter der Steuerung der CPU (200).

9. Vorrichtung nach Anspruch 8, wobei die CPU (200) ermittelt, ob die zweite Speicherkarte (220) in Gebrauch ist, wenn die zweite Speicherkarte (220) eingeführt ist, die Leistung für die erste Speicherkarte (210) ausschaltet, wenn die zweite Speicherkarte (220) in Gebrauch ist, und die Leistung für die erste Speicherkarte (210) einschaltet, wenn die zweite Speicherkarte (220) nicht in Gebrauch ist.

10. Vorrichtung nach Anspruch 9, wobei die CPU (200), wenn die zweite Speicherkarte (220) nicht in Gebrauch ist, die Leistung für die zweite Speicherkarte (220) ausschaltet.

11. Vorrichtung nach Anspruch 9, wobei die CPU (200), wenn die zweite Speicherkarte (220) nicht eingeführt ist, die Leistung für die erste Speicherkarte (210) einschaltet.

12. Vorrichtung nach Anspruch 9, wobei die CPU (200), wenn ein Ereignis zum Wechseln des Speichers im Gebrauch in einem Zustand erzeugt wird, in dem die Leistung für die erste Speicherkarte (210) abgeschaltet ist, die Leistung für die erste Speicherkarte (210) einschaltet und die Leistung für die zweite Speicherkarte (220) ausschaltet.

13. Vorrichtung nach Anspruch 9, wobei die CPU (200), wenn ein Ereignis zum Speichern von Daten in einer zweiten Speicherkarte (220) in einem Zustand erzeugt wird, in dem Leistung für die erste Speicherkarte (210) eingeschaltet ist, die Leistung für die erste Speicherkarte (210) ausschaltet und die Leistung für die zweite Speicherkarte (220) einschaltet.

14. Vorrichtung nach Anspruch 9, wobei die CPU (200) und jede der mehreren Speicherkarten (210, 220) eine Schnittstelle umfasst, die mit einem separaten SD-(Secure Digital)-Block konfiguriert ist.

## Revendications

1. Procédé d'utilisation d'une pluralité de mémoires dans un terminal portable, le procédé comprenant les opérations consistant à :
détecter (301) l'insertion d'une première carte à mémoire (210), au moment où la première carte à mémoire (210) est insérée ;
déterminer (305) si une deuxième carte à mémoire (220) est insérée ou non ; et
piloter l'énergie pour la première carte à mémoire (210), suivant que la deuxième carte à mémoire (220) est insérée ou non.

2. Procédé selon la revendication 1, le pilotage de l'énergie pour la première carte à mémoire (210) comprenant les opérations consistant à :
si la deuxième carte à mémoire (220) est insérée, déterminer si la deuxième carte à mémoire (220) est en utilisation ou non ; et
si la deuxième carte à mémoire (220) est en utilisation, désactiver l'énergie pour la première carte à mémoire (210), et si la deuxième carte à mémoire (220) n'est pas en utilisation, activer l'énergie pour la première carte à mémoire (210).

3. Procédé selon la revendication 2, comprenant en outre l'opération consistant à :
désactiver l'énergie pour la deuxième carte à mémoire (220) si la deuxième carte à mémoire (220) n'est pas en utilisation.

4. Procédé selon la revendication 2, comprenant en outre l'opération consistant à :
activer l'énergie pour la première carte à mémoire (210) si la deuxième carte à mémoire (220) n'est pas insérée.

5. Procédé selon la revendication 2, comprenant en outre l'opération consistant à :
si un événement visant à changer la mémoire en utilisation est généré (315) dans un état où l'énergie pour la première carte à mémoire (210) est hors circuit, activer (317) l'énergie pour la première carte à mémoire (210), et désactiver (317) l'énergie pour la deuxième carte à mémoire (220).

6. Procédé selon la revendication 2, comprenant en outre l'opération consistant à :
si un événement visant à stocker des données dans une deuxième carte à mémoire (220) est généré dans un état où l'énergie pour la première carte à mémoire (210) est en circuit, désactiver l'énergie pour la première carte à mémoire (210), et activer l'énergie pour la deuxième carte à mémoire (220).

7. Procédé selon la revendication 2, la première carte à mémoire (210) et la deuxième carte à mémoire (220) comportant chacune une interface laquelle est configurée avec un bloc Secure Digital, SD, séparé dans le terminal portable.

8. Appareil permettant d'utiliser une pluralité de mémoires dans un terminal portable, l'appareil comprenant :
une unité centrale de traitement, CPU, (200) pour détecter si une pluralité de cartes à mémoire est insérée ou non, et lors de la détection de l'insertion d'une première carte à mémoire (210) parmi la pluralité de cartes à mémoire lorsque la première carte à mémoire (210) est insérée, pour piloter l'énergie pour la première carte à mémoire (210), suivant qu'une deuxième carte à mémoire (220) est insérée ou non ; et
une pluralité d'unités d'alimentation en énergie (230, 240) servant à activer/désactiver l'énergie pour des cartes à mémoire correspondantes (210, 220) sous le pilotage de la CPU (200).

9. Appareil selon la revendication 8, la CPU (200) déterminant si la deuxième carte à mémoire (220) est en utilisation si la deuxième carte à mémoire (220) est insérée, désactivant l'énergie pour la première carte à mémoire (210) si la deuxième carte à mémoire (220) est en utilisation, et activant l'énergie pour la première carte à mémoire (210) si la deuxième carte à mémoire (220) n'est pas en utilisation.

10. Appareil selon la revendication 9, la CPU (200) désactivant l'énergie pour la deuxième carte à mémoire (220), si la deuxième carte à mémoire (220) n'est pas en utilisation.

11. Appareil selon la revendication 9, la CPU (200) activant l'énergie pour la première carte à mémoire (210), si la deuxième carte à mémoire (220) n'est pas insérée.

12. Appareil selon la revendication 9, la CPU (200) activant l'énergie pour la première carte à mémoire (210), et désactivant l'énergie pour la deuxième carte à mémoire (220), si un événement visant à changer la mémoire en utilisation est généré dans un état où l'énergie pour la première carte à mémoire (210) est hors circuit.

13. Appareil selon la revendication 9, la CPU (200) désactivant l'énergie pour la première carte à mémoire (210), et activant l'énergie pour la deuxième carte à mémoire (220), si un événement visant à stocker des données dans une deuxième carte à mémoire (220) est généré dans un état où l'énergie pour la première carte à mémoire (210) est en circuit.

14. Appareil selon la revendication 9, la CPU (200) et chaque carte parmi la pluralité de cartes à mémoire (210, 220) comportant une interface laquelle est configurée avec un bloc Secure Digital, SD, séparé.
